# EUROPÄISCHE PATENTSCHRIFT

(11) **EP 3 105 082 B1**
(45) Veröffentlichungstag und Bekanntmachung des Hinweises auf die Patenterteilung: **27.12.2017**
(21) Anmeldenummer: 15703991.8
(22) Anmeldetag: 11.02.2015
(51) Int. Cl.: B60R 11/04

(54) **KAMERAVORRICHTUNG**
CAMERA DEVICE
DISPOSITIF DE CAMERA

(30) Priorität: 11.02.2014 DE 102014101685
(43) Veröffentlichungstag der Anmeldung: 21.12.2016
(73) Patentinhaber: Huf Hülsbeck & Fürst GmbH & Co. KG, 42551 Velbert (DE)
(72) Erfinder: BUSS, Wolfgang, 42697 Solingen (DE)
(74) Vertreter: Vogel, Andreas
(86) Internationale Anmeldenummer: PCT/EP2015/052894
(87) Internationale Veröffentlichungsnummer: WO 2015/121315

(56) Entgegenhaltungen:
- EP-A1- 2 508 393
- DE-A1-102006 039 192
- DE-A1-102006 048 371
- KR-A- 20120 034 496

## Beschreibung

Die Erfindung betrifft eine Kameravorrichtung, insbesondere als Einparkhilfe für ein Kraftfahrzeug, mit einem Antrieb, der über Getriebemittel mit einer Kamera, die zwischen eine eingefahrene Position und eine ausgefahrene Position bewegbar ist, in Wirkverbindung steht, und einem Schlitten, der die Kamera umfasst und gemeinsam mit der Kamera bewegbar ist.

Die DE 10 2006 039 192 A1 zeigt eine Kamera, die den Außenbereich des Fahrzeuges bildlich erfassen kann, nach dem Oberbegriff von Anspruch 1. Hierbei verfügt die Kameravorrichtung über ein Getriebe, mit dem die Kamera in zwei Stellungen bewegbar ist, nämlich einerseits in eine Einfahrstellung und andererseits in eine Ausfahrstellung.

Es ist Aufgabe der vorliegenden Erfindung eine Kameravorrichtung zu schaffen, die eine größere Funktionalität aufweist, wobei die Grundfunktionalität bezüglich der Einparkhilfe gewährleistet ist.

Die Aufgabe der vorliegenden Erfindung wird durch sämtliche Merkmale des unabhängigen Patentanspruchs 1 gelöst. Vorteilhafte Weiterbildungen der Erfindung sind in den abhängigen Ansprüchen angegeben.

Die Erfindung schließt die technische Lehre ein, dass die Getriebemittel derart ausgebildet sind, dass über eine manuelle Betätigung von außen die Kamera in eine weitere, über die eingefahrene Position hinausgehende Zusatzposition bewegbar ist. Die erfindungsgemäße Kameravorrichtung bietet die zusätzliche Funktion, dass über das manuelle Betätigen der Kamera von außen dem Benutzer zumindest eine weitere Möglichkeit geschaffen wird, eine weitere Funktion am Kraftfahrzeug zu beeinflussen. Der Benutzer kann die Kamera von der eingefahrenen Position in die Zusatzposition manuell bewegen, das bedeutet in das Kraftfahrzeug weiter hineinschieben, wodurch beispielsweise ein weiteres Signal auslösbar ist, um z. B. eine weitere kraftfahrzeugseitige Zusatzfunktion auszulösen. Hierbei kann es sich beispielsweise um die Auslösung eines Signals handeln, welches eine Entriegelung und/oder Verriegelung und/oder Öffnung und/oder Schließung eines Kraftfahrzeugschlosses oder einer Kraftfahrzeugtür oder einer Kraftfahrzeugheckklappe sein kann.

Vorteilhafterweise kann der Abstand der Kamera zwischen der Zusatzposition und der ausgefahrenen Position größer sein, als der Abstand der Kamera zwischen der eingefahrenen Position und der ausgefahrenen Position. Das bedeutet, dass die Kamera bei der Bewegung von der eingefahrenen Position in die Zusatzposition in das Kraftfahrzeug hineinbewegt wird. Die Bewegung kann linear, auf einer Kreisbahn oder in einer Kombination aus beiden zuvor genannten Möglichkeiten erfolgen.

Die Erfindung kann mit umschließen, dass der Schlitten zumindest zweiteilig ausgebildet ist, insbesondere dass der Schlitten durch ein erstes und ein zweites Schlittenteil gebildet ist. Der Schlitten wirkt vorteilhafterweise als Gehäuse für die Kamera. Ein Vorteil der Zweiteiligkeit ist, dass die Montage der Kamera innerhalb des Schlittens vereinfacht ist. Zudem kann der Schlitten an seiner äußeren Gehäusewandung weitere Zusatzfunktionen aufweisen, die beispielsweise Führungsmittel mitumfassen können, um eine zuverlässige Bewegung der Kamera zwischen der eingefahrenen, ausgefahrenen und der Zusatzposition erzielen zu können. Ebenfalls kann die Erfindung mitumfassen, dass der Schlitten Führungsmittel für einen Deckel aufweist, der als Schutzelement für die Kamera, insbesondere für den Schlitten dient, wenn die Kamera sich in ihrer eingefahrenen Position oder Zusatzposition befindet.

Zudem kann die erfindungsgemäße Kameravorrichtung mit umfassen, dass über eine Bewegung der Kamera aus der eingefahrenen Position in Richtung Zusatzposition ein Signal auslösbar ist, insbesondere eine fahrzeugspezifische Funktion auslösbar ist. Somit ist es denkbar, dass die Kamera als Schalter dient.

Ferner bietet die Erfindung die Möglichkeit, dass der Schlitten eine Öffnung aufweist, durch die eine elektrische Leitung bis zur Kamera verläuft, insbesondere dass die Erstreckung der Leitung innerhalb der Öffnung im Wesentlichen senkrecht zur Bewegungsrichtung des Schlittens orientiert ist. Das bedeutet, dass die Zuführung der elektrischen Leitung im Wesentlichen quer zur Bewegungsrichtung des Schlittens verläuft, wobei unter der Bewegungsrichtung die Richtung im Rahmen der Erfindung zu verstehen ist, entlang dieser die Kamera zwischen den möglichen Positionen bewegbar ist. Der Vorteil dieser Ausführungsform der Erfindung ist, dass eine sehr kompakte Ausführungsform der Kameravorrichtung geschaffen werden kann, da die elektrische Leitung seitlich erfolgt. Üblicherweise befindet sich die elektrische Zuleitung an der Schlittenseite oder Kameraseite, die in das Kraftfahrzeug hineinragt. Erfindungsgemäß kann somit die Bautiefe wesentlich reduziert werden.

Erfindungsgemäß umfasst die Kameravorrichtung ein Gehäuse, innerhalb dessen der Schlitten beweglich gelagert ist. Das Gehäuse kann zumindest ein Führungselement aufweisen, an dem der Schlitten während der Bewegung zwischen der genannten Position geführt ist. Das Gehäuse, welches den Schlitten umfasst, kann z. B. Dichtmittel aufweisen, die wirkungsvoll die Kamera vor äußeren Umwelteinflüssen, wie Staub, Feuchtigkeit, Schmutz etc. schützt.

Erfindungsgemäß ist das Gehäuse, welches den Schlitten umfasst, fest im Kraftfahrzeug anordbar, das bedeutet, dass innerhalb des Gehäuses der Schlitten mit der Kamera beweglich ist. Zudem kann das Gehäuse eine Ausnehmung aufweisen, durch die die Leitung verläuft, die mit der Kamera verbunden ist. Die Ausnehmung für die Leitung ist vorteilhafterweise derart ausgebildet, dass eine Relativbewegung der Leitung innerhalb der Ausnehmung des Gehäuses möglich ist. Bei der Ausnehmung kann es sich beispielsweise um ein Langloch handeln, innerhalb dessen die Leitung während der Bewegung der Kamera sich bewegt. Zudem könnte die Erfindung derart ausgestaltet sein, dass das Gehäuse zumindest zweiteilig ausgeführt ist, wobei insbesondere ein vorderes Gehäusesteil und ein hinteres Gehäuseteil das Gehäuse bilden, wobei das vordere Gehäuseteil der ausgefahrenen Position zugewandt ist und das hintere Gehäuseteil der Zusatzposition zugewandt ist. Die Zweiteiligkeit des Gehäuses kann als Montagehilfe dienen, um die erfindungsgemäße Kameravorrichtung zum einen zuverlässig am Kraftfahrzeug zu befestigen und zum anderen montagefreundlich den Schlitten samt Kamera exakt am Kraftfahrzeug zu positionieren.

Vorteilhafterweise kann das Gehäuse eine Aufnahme aufweisen, in der zumindest ein Getriebemittel bewegbar aufgenommen ist. Hierdurch wird eine kompakte Einheit der erfindungsgemäßen Kameravorrichtung geschaffen, wobei das Gehäuse das Medium bildet, Getriebemittel platzsparend und wirkungsvoll bezüglich Kinematik anzuordnen. Vorteilhafterweise kann die Kameravorrichtung derart weitergebildet sein, dass ein Mitnehmer als Getriebemittel in Wirkverbindung mit dem Antrieb steht, wobei der Mitnehmer mit dem Schlitten, insbesondere mit dem zweiten Schlittenteil verbunden ist. Vorteilhafterweise ist der Antrieb ein elektrischer Motor, der für die Bewegung der Kamera zwischen den genannten Positionen sorgt. Vorzugsweise kann der Antrieb ein Antriebselement aufweisen, das auf den Mitnehmer wirkt, wobei insbesondere das Antriebselement drehbar um eine Achse gelagert ist und in eine Kulissenführung des Mitnehmers eingreift. Über die Bewegung des Antriebselements innerhalb der Kulissenführung erfolgt gleichzeitig eine Bewegung des Mitnehmers. Da vorteilhafterweise der Mitnehmer mit dem Schlitten fest verbunden ist, kann die Kamera zwischen den genannten Positionen bewegt werden. In einer besonderen Ausführungsform der Erfindung kann der Mitnehmer drehbar um eine Achse gelagert sein, wobei insbesondere der Mitnehmer in der Aufnahme des Gehäuses sich befindet. Zusätzlich ist es denkbar, dass das Antriebselement einen Nocken aufweist, der bei einer Bewegung der Kamera zwischen der eingefahrenen Position und der ausgefahrenen Position innerhalb der Kulissenführung verfährt. Alternativ ist denkbar, dass das Antriebselement über eine Kulissenführung verfügt und der Mitnehmer einen Nocken aufweist. Beide Ausführungsalternativen zeichnen sich durch eine hohe Lebensdauer aus, sind insbesondere verschleißunanfällig und begünstigen einen kompakten Aufbau der erfindungsgemäßen Kameravorrichtung.

Vorteilhafterweise kann die Kulissenführung einen ersten Bereich aufweisen, innerhalb dessen das sich bewegende Antriebselement bei der Bewegung der Kamera zwischen der eingefahrenen Position und der ausgefahrenen Position verfährt und einen zweiten Bereich aufweist, innerhalb dessen das still stehende Antriebselement bei der Bewegung der Kamera zwischen der eingefahrenen Position und der Zusatzposition verfährt. Die Getriebemittel bieten somit die Möglichkeit, dass die Kamera mit dem Schlitten von der eingefahrenen Position in die Zusatzposition bewegt werden kann, wobei der Benutzer einen manuellen Druck von außen auf die Kameravorrichtung ausübt. Die Kulissenführung mit ihrem zweiten Bereich sorgt dafür, dass der Schlitten in Richtung Zusatzposition verfahren kann, wobei das Antriebselement sich nicht bewegt, insbesondere der Antrieb ausgeschaltet ist. Die Kulissenführung ist derart ausgebildet, dass keine Kollisionen zwischen den Getriebemitteln entstehen kann, da insbesondere der zweite Bereich der Kulissenführung genügend Platz für das Antriebselement bietet, der bei der Bewegung des Schlittens in Richtung Zusatzposition relativ innerhalb der Kulissenführung sich bewegt.

In einer die Erfindung verbessernden Maßnahme kann am Schlitten ein Federelement wirken, dessen Federkraft entgegengesetzt zur Bewegung in Richtung Zusatzposition orientiert ist. Beispielsweise ist es im Rahmen der Erfindung denkbar, dass das Federelement innerhalb einer Kammer des Gehäuses angeordnet ist, wobei insbesondere der Schlitten einen Vorsprung aufweist, der das Federelement kontaktiert. Die Kammer des Gehäuses kann als eine Art Kavität ausgeführt sein, in der das Federelement sicher aufgenommen ist. Vorteilhafterweise kann die Kammer eine Öffnung aufweisen, durch die sich der Vorsprung bei der Bewegung der Kamera in Richtung Zusatzposition erstreckt. Über das Federelement wird sichergestellt, dass die Kamera mit dem Schlitten sicher und zuverlässig aus der Zusatzposition in die eingefahrene Position verfahren kann.

Somit wird eine Befestigung zwischen dem Mitnehmer und dem Schlitten erzielt, wobei gleichzeitig eine Bewegungsfreiheit des Befestigungselementes innerhalb der Ausgleichskontur des Mitnehmers geschaffen wird, da es erfindungsgemäß erforderlich ist, eine Bewegung vom Mitnehmer auf den Schlitten auszuüben.

Erfindungsgemäß kann ein Schalter am Gehäuse angeordnet sein, der zumindest teilweise in den Verfahrweg des Schlittens hineinragt, wobei der Schlitten ein Auslöseelement aufweist, der bei der Bewegung der Kamera in Richtung Zusatzposition den Schalter auslöst. Über den Schalter kann eine fahrzeugspezifische Funktion ausgelöst werden, wodurch sich die Funktionalität der Kameravorrichtung sicher erhöhen lässt.

Zudem hat die erfindungsgemäße Kameravorrichtung einen bewegbaren Deckel, der die Kamera in der eingefahrenen Position verdeckt und in der ausgefahrenen Position der Deckel in einer Offenstellung sich befindet, bei der die Kamera eine freie Sicht nach außen hat. Zudem kann die Erfindung derart weitergebildet sein, dass der Deckel innenseitig mindestens ein Druckelement aufweist, das bei einer manuellen Betätigung von außen auf die Kamera wirkt, insbesondere auf den Schlitten wirkt. Der Deckel kann drehbar um eine Achse am Gehäuse angeordnet sein. Der Benutzer kann den in Schließstellung sich befindenden Deckel betätigen, insbesondere einen manuellen Druck ausüben, wodurch über das Druckelement des Deckels eine Kraftübertragung auf den Schlitten erfolgt, wodurch eine Überführung des Schlittens mit der Kamera aus der eingefahrenen Position in die Zusatzposition erfolgen kann.

Vorteilhafterweise stellt der Schlitten eine Umhüllung für die Kamera dar, wobei in der Umhüllung zumindest eine Öffnung für eine Linse der Kamera angeordnet ist. Alternativ und/oder zusätzlich sind zwischen der Kamera und dem Schlitten Dichtelemente angeordnet, wodurch die Kamera vor Umwelteinflüssen geschützt ist.

Erfindungsgemäß kann vorgesehen sein, dass eine Crashsperre vorgesehen ist, die bei einem etwaigen Unfall auf den Schlitten wirkt, wodurch verhindert wird, dass der Schlitten aus der eingefahrenen Position in die Zusatzposition verfährt. Bei einem Unfall können Beschleunigungskräfte auf die Kameravorrichtung wirken, wodurch ohne Crashsperre eine ungewollte Bewegung des Schlittens in die Zusatzposition denkbar wäre. Die erfindungsgemäße Crashsperre, die innenseitig innerhalb der Kameravorrichtung angeordnet ist, verhindert dies wirkungsvoll. Beispielsweise ist es denkbar, dass die Crashsperre um eine Drehachse verfahren kann und zumindest zwei Positionen einnehmen kann, eine Ruheposition und eine aktive Position, wobei in der Ruheposition der Schlitten in seine jeweiligen Positionen verfahren kann. In der aktiven Position der Crashsperre verhindert diese wirkungsvoll, dass der Schlitten die Zusatzposition erreicht, wodurch wirkungsvoll verhindert wird, dass das Schaltelement aktiviert wird. Die Crashsperre kann mit mehreren Gewichten ausgeführt sein, die aufgrund der Trägheitskraft bei einem Unfall ausgelenkt werden, so dass die Crashsperre zwischen Ruheposition und aktiver Position bewegt und/oder verschwenkt werden kann.

Weitere Vorteile, Merkmale und Einzelheiten der Erfindung ergeben sich aus der nachfolgenden Beschreibung, in der unter Bezugnahme auf die Zeichnungen mögliche Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
Fig. 1 eine mögliche Ausführungsform einer erfindungsgemäßen Kameravorrichtung,
Fig. 2 die Kameravorrichtung gemäß Figur 1 in einer weiteren Perspektive,
Fig. 3 die Kameravorrichtung gemäß Figur 1 in einer weiteren Schnittdarstellung,
Fig. 4 die Schnittdarstellung gemäß Figur 3 in vergrößerter Darstellung,
Fig. 5 eine Explosionsdarstellung der Kameravorrichtung gemäß Figur 1,
Fig. 6 eine weitere Explosionsdarstellung der Kameravorrichtung gemäß Figur 1,
Fig. 7 ein weiteres Ausführungsbeispiel der Kameravorrichtung gemäß Figur 1 mit einer Crashsperre,
Fig. 8 die Kameravorrichtung in einer eingefahrenen Position,
Fig. 9 die Kameravorrichtung in einer ausgefahrenen Position und
Fig. 10 die Kameravorrichtung in einer Zusatzposition.

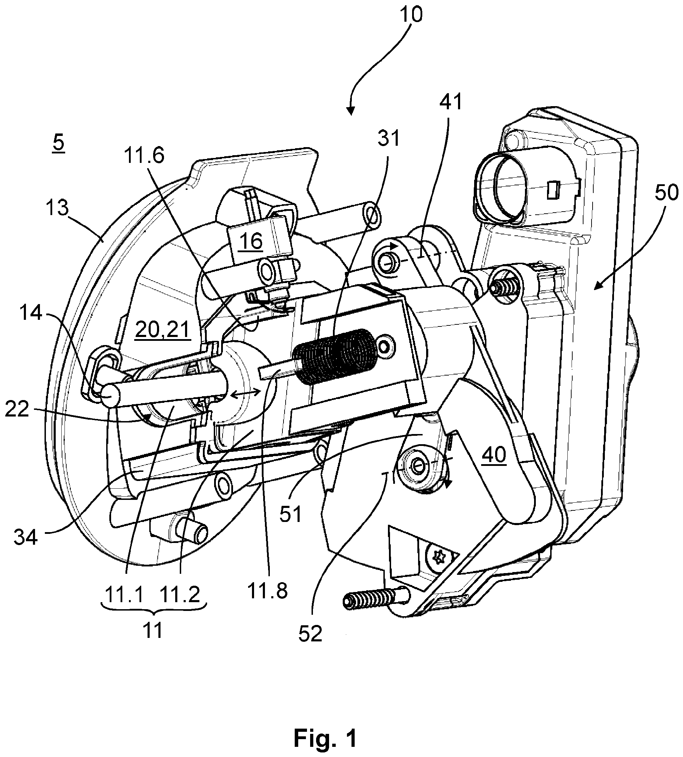

In den Figuren 1 bis 10 ist eine mögliche Ausführungsform einer erfindungsgemäßen Kameravorrichtung 10 gezeigt, die als Einparkhilfe für ein Kraftfahrzeug dient. Die Kameravorrichtung 10 verfügt über einen Antrieb 50, der über Getriebemittel mit einer Kamera 4 verbunden ist. Die Kamera 4 lässt sich zwischen einer eingefahrenen Position 1, einer ausgefahrenen Position 2 sowie einer Zusatzposition 3 bewegen. In der eingefahrenen Position 1 befindet sich die Kamera 4 in der Ruhestellung, ohne das eine Aufnahme des Außenbereiches 5 stattfindet. Während des Einparkvorgangs wird die Kamera 4 in ihre ausgefahrene Position 2 bewegt, um Bildinformationen, die sich auf den Außenbereich 5 des Kraftfahrzeuges beziehen, für den Benutzer zur Verfügung zu stellen.

Die Kamera 4 befindet sich innerhalb eines Schlittens 11, der als ein inneres Kameragehäuse wirkt. Während sich die Kamera 4 in die jeweilige Position 1, 2, 3 bewegt, erfolgt gleichzeitig eine Bewegung des Schlittens 11, wobei gemäß des Ausführungsbeispiels der Schlitten 11 fest mit der Kamera 4 verbunden ist.

Im vorliegenden Ausführungsbeispiel ist der Schlitten 11 zweiteilig ausgebildet, wobei ein erstes Teil 11.1 und ein zweites Teil 11.2 den Kameraschlitten 11 bilden. Seitlich ist eine Öffnung 11.7 im Schlitten 11 angeordnet, durch die eine elektrische Leitung 14 (Kamerakabel) verläuft, die im inneren des Kameraschlittens 11 mit der Kamera 4 elektronisch verbunden ist. Ein Vorteil des zweiteiligen Kameraschlittens 11 ist, dass die Kamera 4 montagefreundlicher im Kameraschlitten 11 montiert werden kann.

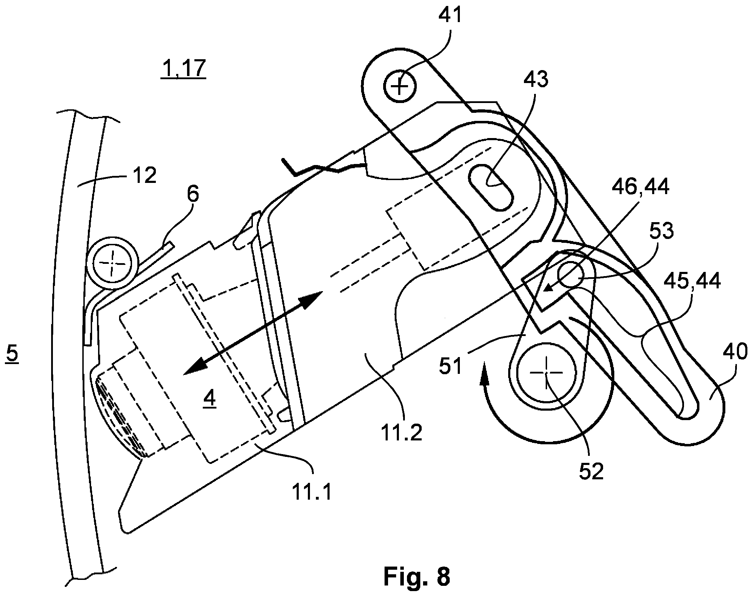

Wie in den Figuren gezeigt ist, sind die Getriebemittel derart ausgebildet, dass über eine manuelle Betätigung von außen 5 die Kamera 4 in eine weitere, über die eingefahrene Position 1 hinausgehende Zusatzposition 3 bewegbar ist, welches in den Figur 8 bis 10 gezeigt ist. Über die Bewegung der Kamera 4 aus der eingefahrenen Position 1 in Richtung Zusatzposition 3 lässt sich ein Signal auslösen, welches eine fahrzeugspezifische Funktion auslösen kann. Im vorliegenden Ausführungsbeispiel dient das Signal dazu, dass die Heckklappe geöffnet werden kann. Gemäß Figur 1 bis 4 sowie Figur 10 drückt der Benutzer auf die Kameravorrichtung 10, insbesondere auf einen Deckel 12 der Kameravorrichtung 10, der gemäß den Figuren 1 bis 4 sich in der Schließstellung 17 befindet. In der ausgefahrenen Position 2 der Kamera 4 befindet sich der Deckel 12 in der Offenstellung 18. Auf den Deckel 12 wirkt eine Feder 6, so dass zuverlässig der Deckel 12 aus der Offenstellung 18 selbständig in die Schließstellung 17 verfahren kann, wenn die Kamera 4 in Richtung der eingefahrenen Position 1 bewegt wird.

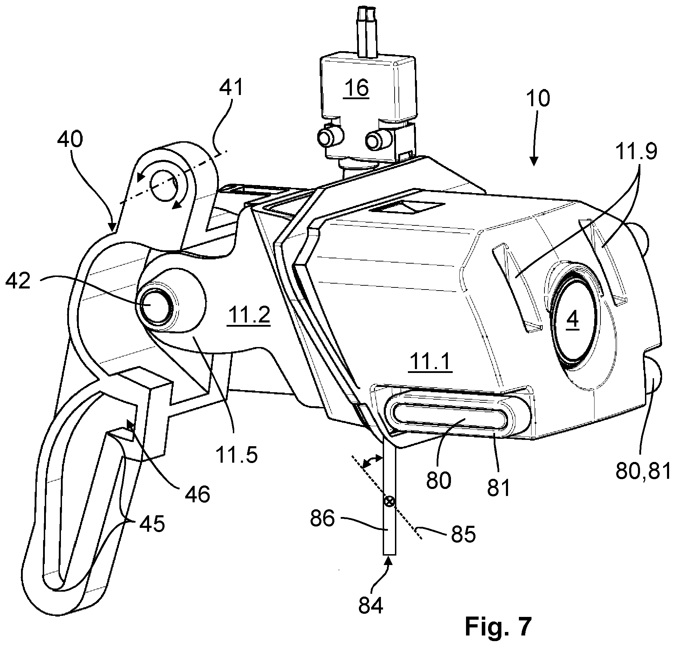

Der Schlitten 11 weist seitlich eine Öffnung 11.7 auf, durch die die elektrische Leitung 14 bis zur Kamera 4 verläuft. Der Kameraschlitten 11 ist zudem erfindungsgemäß durch ein Gehäuse 20 umfasst, welches im vorliegenden Ausführungsbeispiel zweiteilig ausgeführt ist. Hierbei weist das Gehäuse 20 ein vorderes Gehäuseteil 21 und ein hinteres Gehäuseteil 30 auf. Das vordere Gehäuseteil 21 ist zum Deckel 12 ausgerichtet, wobei das hintere Gehäuseteil 30 zum Antrieb 50 zugewandt ist. Das vordere Gehäuseteil 21 umfasst eine Öffnung 23, die zum Deckel 12 ausgerichtet ist. In der eingefahrenen Position 1 bzw. in der Zusatzposition 3 verdeckt der Deckel 12 die Öffnung 23. In der ausgefahrenen Position 2 der Kamera 4 hingegen befindet sich der Deckel 12 in der Offenstellung 18, wobei die Öffnung 23 von außen 5 sichtbar ist und die Kamera 4 zumindest teilweise durch die Öffnung 23 sich erstreckt. Das Gehäuse 20 weist zudem eine seitliche Ausnehmung 22 auf, durch die die Leitung 14 verläuft. Die Ausnehmung 22 wird durch eine Abdeckung 26 verdeckt, die auch eine abdichtende Funktion aufweist. Die Ausnehmung 22 ist vergrößert ausgebildet, so dass bei einer Bewegung des Schlittens 11 die Leitung 14 zuverlässig sich in der Ausnehmung 22 bewegen kann. Die Ausnehmung 22 bietet somit einen genügend großen Bewegungsspielraum für die Leitung 14. Gemäß Figur 1 und Figur 7 ist der Schlitten 11 innerhalb des Gehäuses 20 beweglich gelagert, wobei das Gehäuse 20 ein Führungselement 34 aufweist, in dem der Schlitten 11 während der Bewegung zwischen den Positionen 1, 2, 3 geführt ist. Der Schlitten 11, insbesondere das erste Teil 11.1 des Schlittens 11 weist eine Aufnahme 80 auf, die innerhalb des Führungselementes 34 des Gehäuses 20 beweglich gelagert ist. Gemäß des dargestellten Ausführungsbeispiels umfasst ein Band 81 die Aufnahme 80, wobei das Band vorteilhafterweise aus POM ist. Wenn die Kamera 4 in die jeweilige Position 1, 2, 3 bewegt wird, verfährt das Band 80 innerhalb des Führungselementes 34 des Gehäuses 20. Wie in Figur 7 gezeigt ist, weist das erste Teil 11.1 des Schlittens 11 zu beiden Seiten hin die oben beschriebene Aufnahme 80 auf, die durch jeweils ein Band 81 umfasst ist. Es hat sich gezeigt, dass während der Bewegung des Schlittens 11 keine Geräuschentwicklung innerhalb des Führungselementes 34 des Gehäuses 20 entsteht. Zudem ist eine derartige Lagerung des Schlittens 11 am Gehäuse 20 sehr verschleißarm.

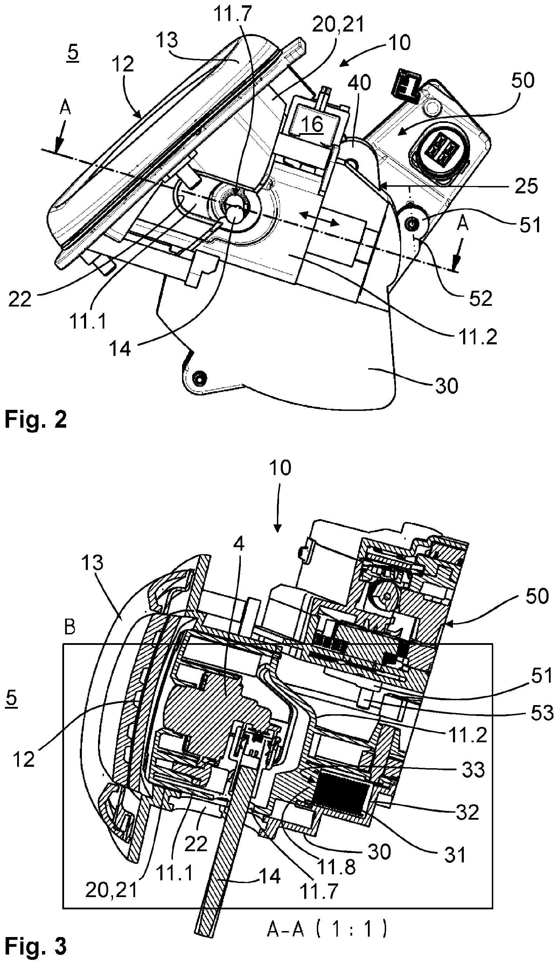

In Figur 2 ist zu erkennen, dass das Gehäuse 20 eine Aufnahme 25 aufweist, in der zumindest ein Getriebemittel zur Bewegung des Schlittens 11 in seine jeweilige Position 1, 2, 3 bewegbar aufgenommen ist. Das Getriebemittel steht mit dem Antrieb 50 in Wirkverbindung, wobei der Antrieb 50 beispielsweise ein Elektromotor sein kann. Das Getriebemittel kann einen gemäß Figur 2 vorgesehenen Mitnehmer 40 aufweisen, der in der Aufnahme 25 des hinteren Gehäuseteils 30 sich befindet.

Gemäß des Ausführungsbeispiels weist der Antrieb 50 ein Antriebselement 51 auf, das um eine Achse 52 bewegbar ist. Zudem ist das Antriebselement 51 mit einem Nocken 53 ausgebildet, der an dem Mitnehmer 40 angreift. Der Mitnehmer 40 weist eine Kulissenführung 44 auf und ist drehbar um die Achse 41 gelagert. Der Nocken 53 verfährt innerhalb der Kulissenführung 44, wenn die Kamera 4 sich in ihre jeweilige Position 1, 2, 3 bewegt.

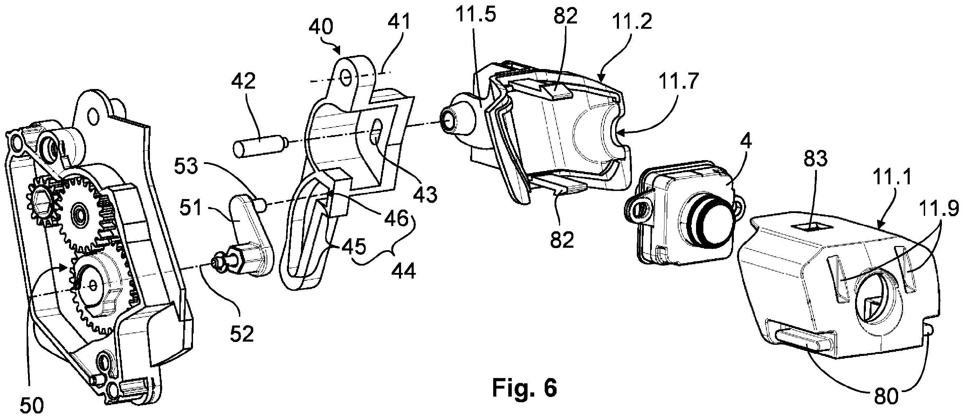

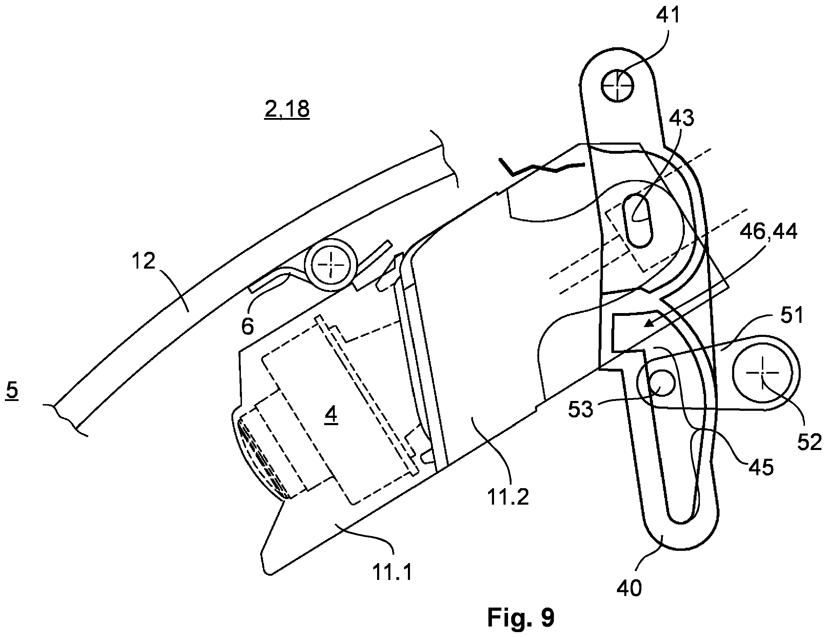

In Figur 8 ist die eingefahrene Position 1 der Kamera 4 gezeigt. Der Nocken 53 befindet sich in einem ersten Bereich 45 der Führung 44. Erfolgt nun über den Antrieb 50 eine Bewegung des Antriebselementes 51 im Uhrzeigersinn, verfährt der Nocken 53 innerhalb der Kulissenführung 44, insbesondere innerhalb des ersten Bereiches 45 bis zu der Stellung gemäß Figur 9. Während das Antriebselement 51 sich im Uhrzeigersinn um die Achse 52 verschwenkt hat, erfolgt eine Verschwenkung des Mitnehmers 40 im Uhrzeigersinn um die Achse 41. Beabstandet zur Achse 41 ist der Mitnehmer 40 mit dem Schlitten 11 mittels eines Befestigungselementes 42 verbunden. Dieses ist insbesondere in Figur 6 und 7 dargestellt. Hier ist gezeigt, dass das Befestigungselement 42 innerhalb einer Ausgleichskontur 43 des Mitnehmers 40 beweglich ist. Die Ausgleichskontur 43 ist im vorliegenden Ausführungsbeispiel ein Langloch. Bei dem Befestigungselement 42 kann es sich beispielsweise um eine Nietverbindung handeln.

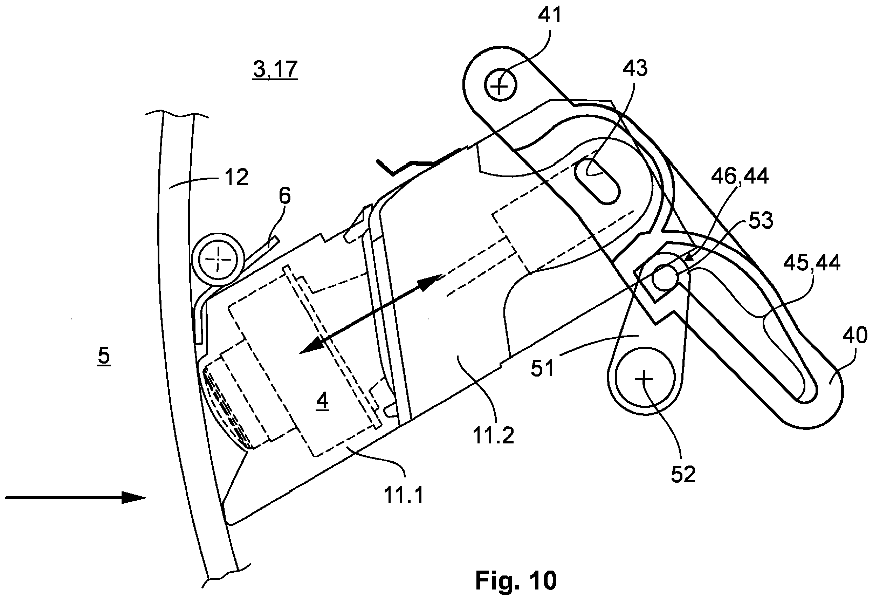

Eine Zurückbewegung der Kamera 4 aus der ausgefahrenen Position 2 in die eingefahrene Position 1 kann dadurch erfolgen, dass über den Antrieb 50 das Antriebselement 51 gegen den Uhrzeigersinn aus Figur 9 gedreht wird, bis die Position des Antriebselementes 51 erreicht ist, die es in Figur 8 einnimmt. Erfolgt nun von außen eine manuelle Betätigung durch den Benutzer auf den Schlitten 11, wird der Schlitten 11 von der eingefahrenen Position 1 in die Zusatzposition 3 bewegt, welches in Figur 10 gezeigt ist. Hierbei ist die Kulissenführung 44 derart ausgebildet, dass zuverlässig der Schlitten 11 mit dem daran angeordneten Mitnehmer 40 in das Kraftfahrzeuginnere bewegt werden kann, ohne dass es zu einer ungewollten Kollision mit feststehenden Getriebemitteln, wie z. B. dem Antriebselement 51 kommt. Aus diesem Grund weist die Kulissenführung 44 einen zweiten Bereich 46 auf, der eine weitere Ausnehmung innerhalb des Mitnehmers 40 ist, wobei die Ausnehmung in Richtung Deckel 12 sich erstreckt. Im Gegensatz zum zweiten Bereich 46 ist der erste Bereich 45 der Kulissenführung 44 länglich erstreckt, und zwar in entgegengesetzter Richtung zur Achse 41 des Mitnehmers 40. Eine Seite des ersten Bereiches 45 ist zudem teilweise kreissegmentartig ausgeführt, so dass bei einer Drehung des Antriebselementes 51 ausgehend von Figur 8 im Uhrzeigersinn zunächst der Mitnehmer 40 in seiner Position verbleibt. Hierdurch wird ein Freilauf erzeugt, der vorteilhaft sein kann, insbesondere bei der Auswahl von einfachen, kostengünstigen Elektromotoren. Erst ab einer gewissen Drehstellung des Antriebs 50 bzw. des Antriebselements 51 nimmt der Nocken 53 den Mitnehmer 40 im Uhrzeigersinn mit, wodurch eine Bewegung des Schlittens 11 erzielt wird. Vorteilhafterweise handelt es sich bei der im Ausführungsbeispiel gezeigten Bewegung des Schlittens 11 um eine Linearbewegung zwischen den jeweiligen Positionen 1, 2, 3.

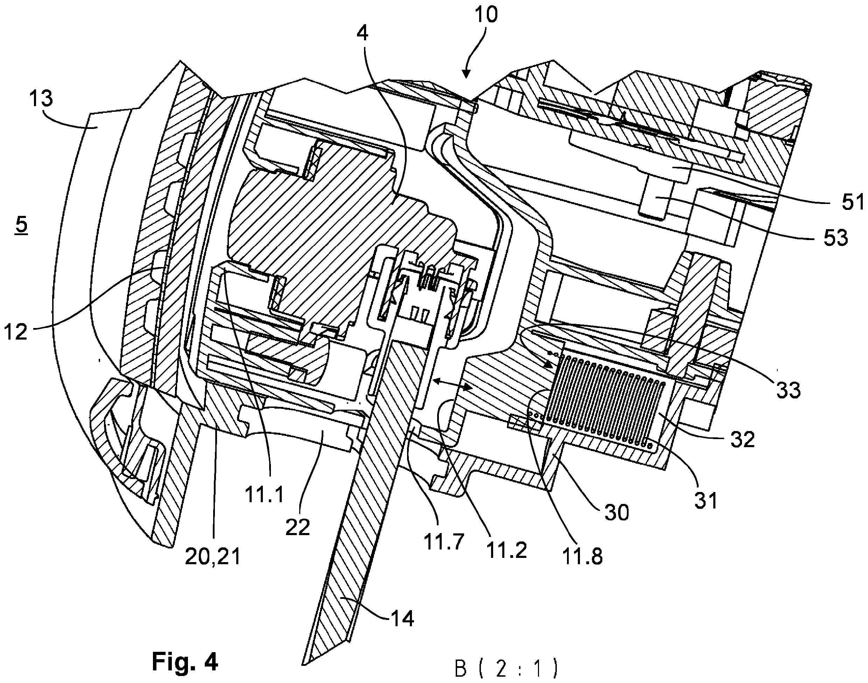

Gemäß Figur 3 und 4 ist gezeigt, dass auf den Schlitten 11 eine Feder 31 wirkt, um den Schlitten 11 von der Zusatzposition 3 wieder zurück in die eingefahrene Position 1 zu bewegen. Die Feder 31 befindet sich in einer Kammer 32 des Gehäuses 20, insbesondere des hinteren Gehäuseteils 30, wobei die Kammer 32 mit einer Öffnung 33 versehen ist, in die ein Vorsprung 11.8 einfahren kann. In der eingefahrenen Position 1 der Kamera 4 übt vorzugsweise das Federelement 31 keine Kraft auf den Vorsprung 11.8 aus. Erst bei der Bewegung in Richtung Zusatzposition 3 erfolgt eine Annäherung des Vorsprungs 11.8 an das Federelement 31. Übt der Benutzer keine Kraft mehr auf den Schlitten 11, insbesondere auf den Deckel 12 aus, bewirkt die Federkraft der Feder 31, die auf den Vorsprung 11.8 wirkt, dass der Schlitten 11 mit der Kamera 4 zurück in die eingefahrene Position 1 verfährt.

Ebenfalls ist es denkbar, dass die Zusatzposition 3 über Rastmittel gehalten werden kann, was explizit nicht gezeigt ist. Wie in Figur 1 und 2 dargestellt ist, ist die Kameravorrichtung 10 mit einem Schaltelement 16 vorgesehen, dass oberhalb des Schlittens 11 angeordnet ist. Der Schalter 16 ragt zumindest teilweise in den Verfahrweg des Schlittens 11 hinein. Zudem weist der Schlitten 11 ein Auslöseelement 11.6 auf, das bei der Bewegung der Kamera 4 in Richtung Zusatzposition 3 das Schaltelement 16 auslöst. Das Schaltelement 16 ist fest am Gehäuse 20 befestigt. Wird das Schaltelement 16 aktiviert, folgt eine Auslösung eines Signals, wodurch eine fahrzeugspezifische Funktion auslösbar ist.

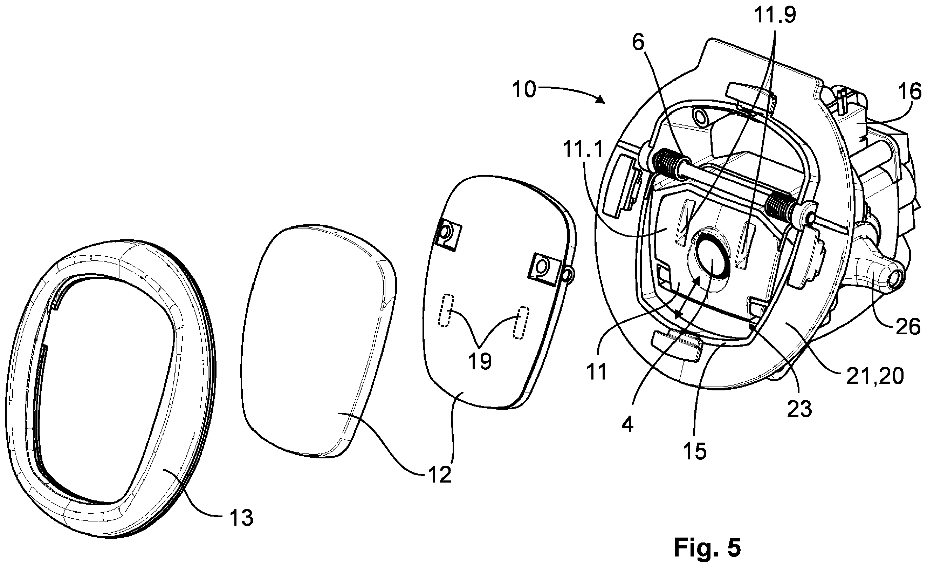

Wie in Figur 5 gezeigt ist, weist der bewegbare Deckel 12 innenseitig Druckelemente 19 auf, die bei einer manuellen Betätigung von außen 5 auf die Kamera 4 wirken. Die Druckelemente 19 greifen in Aufnahmen 11.9 ein, wobei bei einem Herausbewegen der Kamera 4 in die ausgefahrene Position 2 die Druckelemente 19 in den Aufnahmen 11.9 entlang gleiten und eine entsprechende Führung bei der Bewegung des Deckels 12 haben. Die Druckelemente 19 befinden sich innenseitig am Deckel 12 und erstrecken sich vorsprungartig in Richtung Schlitten 11.

Gemäß Figur 7 ist der Schlitten 11, insbesondere der zweite Teil 11.2 mit einem Halteelement 11.5 ausgeführt, durch den das Befestigungselement 42 sich erstreckt. Im Bereich der Öffnung 23 befindet sich eine Dichtung 15, auf der der Deckel 12 in der Schließstellung 17 anliegt, siehe Figur 5. Bei der Dichtung 15 handelt es sich im vorliegenden Ausführungsbeispiel um eine Labyrinthdichtung, die eine wirksame Abdichtung bewirkt. Ein Zierring 13 ist umfangseitig zum Deckel 12 angeordnet, wobei der Zierring vorsprungartig aus dem Kraftfahrzeug nach außen 5 sich erstreckt.

In Figur 7 ist eine Crashsperre 84 gezeigt, die zwischen einer Ruheposition 85 und einer aktiven Position 86 bewegbar ist. In der Regel befindet sich die Crashsperre 84 in der Ruheposition 85, so dass der Schlitten 11 in seine jeweiligen Positionen 1, 2, 3 verfahren werden kann. Bei einem Unfall können Beschleunigungskräfte auf das Kraftfahrzeug, insbesondere die Kameravorrichtung 10 wirken, so dass ungewollt es zu einer Verschiebung des Schlittens 11 in Richtung Zusatzposition 3 kommen kann. Folglich würde ungewollt der Schalter 16 ausgelöst werden. Um dies zu verhindern, schlägt die Crashsperre 84 aus ihrer Ruheposition 85 in die aktive Position 86 aus und wirkt unmittelbar am Schlitten 11 und zwar derart, dass die Crashsperre 84 in ihrer aktiven Position 86 verhindert, dass der Schlitten 11 in Richtung Zusatzposition 3 verfährt. Gemäß Figur 7 ist exemplarisch die Crashsperre 84 in ihrer aktiven Position 86 gezeigt, wobei die Ausgestaltung der Crashsperre 84 stark schematisiert ist. Selbstverständlich ist es denkbar, dass die Crashsperre 84 anderweitig am Schlitten 11 wirken kann. In der Regel weist die Crashsperre 84 ein Gewicht auf, welches aufgrund der Trägheit schneller in Richtung aktive Position 86 bewegt wird, als es der Schlitten 11 tun würde.

### Bezugszeichenliste

- 1: eingefahrene Position
- 2: ausgefahrene Position
- 3: Zusatzposition
- 4: Kamera
- 5: außen
- 6: Federelement, Feder

- 10: Kameravorrichtung
- 11: Kameraschlitten, zweiteilig
- 11.1: erstes Teil
- 11.2: zweites Teil
- 11.5: Halteelement
- 11.6: Auslöseelement
- 11.7: Öffnung (für Kabel)
- 11.8: Vorsprung
- 11.9: Aufnahme
- 12: Deckel
- 13: Zierring
- 14: Elektrische Leitung, Kamerakabel
- 15: Dichtung
- 16: Schaltelement, Schalter
- 17: Schließstellung
- 18: Offenstellung
- 19: Druckelement
- 20: Gehäuse, zweiteilig
- 21: vorderes Gehäuseteil
- 22: Ausnehmung
- 23: Öffnung (für Kamera)

- 25: Aufnahme
- 26: Abdeckung, Tülle

- 30: hinteres Gehäuseteil
- 31: Feder
- 32: Kammer
- 33: Öffnung
- 34: Führungselement

- 40: Mitnehmer
- 41: Achse
- 42: Befestigungselement
- 43: Ausgleichskontur, Langloch
- 44: Kulissenführung
- 45: erster Bereich
- 46: zweiter Bereich

- 50: Antrieb
- 51: Antriebselement
- 52: Achse
- 53: Nocken

- 80: Aufnahme
- 81: Band, Antriebsband

- 84: Crashsperre
- 85: Ruheposition
- 86: aktive Position

## Patentansprüche

1. Kameravorrichtung (10), insbesondere als Einparkhilfe für ein Kraftfahrzeug, mit
einem Antrieb (50), der über Getriebemittel mit einer Kamera (4), die zwischen eine eingefahrene Position (1) und eine ausgefahrene Position (2) bewegbar ist, in Wirkverbindung steht,
einem Schlitten (11), der die Kamera (4) umfasst und gemeinsam mit der Kamera (4) bewegbar ist, **dadurch gekennzeichnet dass** die Getriebemittel derart ausgebildet sind, dass über eine manuelle Betätigung von außen (5) die Kamera (4) in eine weitere, über die eingefahrene Position (1) hinaus gehende Zusatzposition (3) hinein bewegbar ist.

2. Kameravorrichtung (10) nach Anspruch 1,
**dadurch gekennzeichnet,**
**dass** der Abstand der Kamera (4) zwischen der Zusatzposition (3) und der ausgefahrenen Position (2) größer ist als der Abstand der Kamera (4) zwischen der eingefahrenen Position (1) und der ausgefahrenen Position (2).

3. Kameravorrichtung (10) nach Anspruch 1 oder 2,
**dadurch gekennzeichnet,**
**dass** der Schlitten (11) zumindest zweitteilig ausgebildet ist, insbesondere dass der Schlitten (11) durch ein erstes (11.1) und ein zweites Schlittenteil (11.2) gebildet ist.

4. Kameravorrichtung (10) nach einem der vorhergehenden Ansprüche,
**dadurch gekennzeichnet,**
**dass** über eine Bewegung der Kamera (4) aus der eingefahrenen Position (1) in Richtung Zusatzposition (3) ein Signal auslösbar ist, insbesondere eine fahrzeugspezifische Funktion auslösbar ist oder die Kamera als Schalter dient.

5. Kameravorrichtung (10) nach einem der vorhergehenden Ansprüche,
**dadurch gekennzeichnet,**
**dass** der Schlitten (11) eine Öffnung (11.7) aufweist, durch die eine elektrische Leitung (14) bis zur Kamera (4) verläuft, insbesondere dass die Erstreckung der Leitung (14) innerhalb der Öffnung (11.7) im Wesentlichen senkrecht zur Bewegungsrichtung des Schlittens (11) orientiert ist.

6. Kameravorrichtung (10) nach einem der vorhergehenden Ansprüche,
**dadurch gekennzeichnet,**
**dass** ein Gehäuse (20) vorgesehen ist, innerhalb dessen der Schlitten (11) beweglich gelagert ist, insbesondere dass das Gehäuse (20) zumindest ein Führungselement (34) aufweist, an dem der Schlitten (11) während der Bewegung zwischen den Positionen (1, 2, 3) geführt ist.

7. Kameravorrichtung (10) nach einem der vorhergehenden Ansprüche,
**dadurch gekennzeichnet,**
**dass** das Gehäuse (20) eine Ausnehmung (22) aufweist, durch die die Leitung (14) verläuft, wobei die Ausnehmung (22) derart ausgebildet ist, dass eine Relativbewegung der Leitung (14) innerhalb der Ausnehmung (22) ermöglicht ist.

8. Kameravorrichtung (10) nach einem der vorhergehenden Ansprüche,
**dadurch gekennzeichnet,**
**dass** das Gehäuse (20) zumindest zweiteilig ausgeführt ist, wobei insbesondere ein vorderes Gehäusesteil (21) und ein hinteres Gehäuseteil (30) das Gehäuse (20) bilden, wobei das vordere Gehäuseteil (21) der ausgefahrenen Position (2) zugewandt ist und das hintere Gehäuseteil (30) der Zusatzposition (3) zugewandt ist.

9. Kameravorrichtung (10) nach einem der vorhergehenden Ansprüche,
**dadurch gekennzeichnet,**
**dass** das Gehäuse (20) eine Aufnahme (25) aufweist, in der zumindest ein Getriebemittel bewegbar aufgenommen ist.

10. Kameravorrichtung (10) nach einem der vorhergehenden Ansprüche,
**dadurch gekennzeichnet,**
**dass** ein Mitnehmer (40) als Getriebemittel in Wirkverbindung mit dem Antrieb (50) steht, wobei der Mitnehmer (40) mit dem Schlitten (11), insbesondere mit dem zweiten Schlittenteil (11.2) verbunden ist.

11. Kameravorrichtung (10) nach einem der vorhergehenden Ansprüche,
**dadurch gekennzeichnet,**
**dass** der Antrieb (50) ein Antriebselement (51) aufweist, das auf den Mitnehmer (40) wirkt, wobei insbesondere das Antriebselement (51) drehbar um eine Achse (52) gelagert ist und in eine Kulissenführung (44) des Mitnehmers (40) eingreift oder das Antriebselement (51) einen Nocken (53) aufweist, der bei einer Bewegung der Kamera (4) zwischen der eingefahrenen Position (1) und der ausgefahrenen Position (2) innerhalb der Kulissenführung (44) verfährt.

12. Kameravorrichtung (10) nach einem der vorhergehenden Ansprüche,
**dadurch gekennzeichnet,**
**dass** der Mitnehmer (40) drehbar um eine Achse (41) gelagert ist, wobei insbesondere der Mitnehmer (40) in der Aufnahme (25) des Gehäuses (20) sich befindet.

13. Kameravorrichtung (10) nach einem der vorhergehenden Ansprüche,
**dadurch gekennzeichnet,**
**dass** die Kulissenführung (44) einen ersten Bereich (45) aufweist, innerhalb dessen das sich bewegende Antriebselement (51) bei der Bewegung der Kamera (4) zwischen der eingefahrenen Position (1) und der ausgefahrenen Position (2) verfährt und einen zweiten Bereich (46) aufweist, innerhalb dessen das still stehende Antriebselement (51) bei der Bewegung der Kamera (4) zwischen der eingefahrenen Position (1) und der Zusatzposition (3) verfährt.

14. Kameravorrichtung (10) nach einem der vorhergehenden Ansprüche,
**dadurch gekennzeichnet,**
**dass** am Schlitten (11) ein Federelement (6) wirkt, dessen Federkraft entgegengesetzt zur Bewegung in Richtung Zusatzposition (3) orientiert ist, wobei insbesondere das Federelement (6) innerhalb einer Kammer (32) des Gehäuses (20) angeordnet ist, wobei insbesondere der Schlitten (11) einen Vorsprung (11.8) aufweist, der das Federelement (6) kontaktiert.

15. Kameravorrichtung (10) nach einem der vorhergehenden Ansprüche,
**dadurch gekennzeichnet,**
**dass** die Kammer (32) eine Öffnung (33) aufweist, durch die sich der Vorsprung (11.8) bei der Bewegung der Kamera (4) in Richtung Zusatzposition (3) erstreckt.

16. Kameravorrichtung (10) nach einem der vorhergehenden Ansprüche,
**dadurch gekennzeichnet,**
**dass** der Mitnehmer (40) mit dem Schlitten (11) mittels eines Befestigungselementes (42) miteinander verbunden sind, wobei insbesondere das Befestigungselement (42) innerhalb einer Ausgleichskontur (43) des Mitnehmers (40) beweglich ist.

17. Kameravorrichtung (10) nach einem der vorhergehenden Ansprüche,
**dadurch gekennzeichnet,**
**dass** ein Schalter (16) am Gehäuse (20) angeordnet ist, der zumindest teilweise in den Verfahrweg des Schlittens (11) hineinragt, wobei der Schlitten (11) ein Auslöseelement (11.6) aufweist, der bei der Bewegung der Kamera (4) in Richtung Zusatzposition (3) den Schalter (16) auslöst oder das Gehäuse (20) feststehend ist, innerhalb dessen der Schlitten (11) bewegbar ist.

18. Kameravorrichtung (10) nach einem der vorhergehenden Ansprüche,
**dadurch gekennzeichnet,**
**dass** ein bewegbarer Deckel (12) die Kamera (4) in der eingefahrenen Position (1) verdeckt und in der ausgefahrenen Position (2) der Deckel (12) in einer Offenstellung (18) sich befindet, bei der die Kamera (4) eine freie Sicht nach außen (5) hat, insbesondere dass der Deckel (12) innenseitig mindestens ein Druckelement (19) aufweist, das bei einer manuellen Betätigung von außen (5) auf die Kamera (4) wirkt.

19. Kameravorrichtung (10) nach einem der vorhergehenden Ansprüche,
**dadurch gekennzeichnet,**
**dass** eine Crashsperre (84) vorgesehen ist, die bei einem etwaigen Unfall auf den Schlitten (11) wirkt, wodurch verhindert wird, dass der Schlitten (11) aus der eingefahrenen Position (1) in die Zusatzposition (3) verfährt.

## Claims

1. Camera Device (10), particularly as a parking assistent apparatus for a motor vehicle with a drive (50) which is an operative connection via gear means with a camera (4) which is moveable between a retracted position (1) and a deployed position (2) a carriage (11) which embraces the camera (4) and is moveable together with the camera (4),
**characterized in that**
the gear means are configured in a such a way, that the camera (4) is moveable into a further additional position (3) beyond the retracted position (1) by manual actuation from the outside.

2. Camera device (10) according to claim 1,
**characterized in that**
the distance of the camera (4) between the additional position (3) and the deployed position (2) is greater than the distance of the camera (4) between the retracted position (1) and the deployed position (2).

3. Camera device (10) according to claim 1 or 2,
**characterized in that**
the carriage (11) is configured at least from two parts, particularly that the carriage (11) is configured by a first (11.1) and a second carriage part (11.2).

4. Camera device (10) according to one of the preceding claims,
**characterized in that**
by a movement of the camera (4) from the retracted position (1) in the direction of the additional position (3) a signal is triggerable, in particular a vehicle specific function is triggerable and the camera (4) serves as a switch.

5. Camera device (10) according to one of the preceding claims,
**characterized in that**
the carriage (11) comprises an opening (11.7) through which an electric wire (14) proceeds to the camera (4), particularly that the extension of the wire (14) within the opening (11.7) is oriented mainly perpendicularly to the movement direction of the carriage (11).

6. Camera device (10) according to one of the preceding claims,
**characterized in that**
a housing (20) is provided within which the carriage (11) is moveably mounted, particularly that the housing (20) comprises at least one guidance element (34) at which the carriage (11) is guided during the movement between the positions (1, 2, 3).

7. Camera device (10) according to one of the preceding claims,
**characterized in that**
the housing (20) comprises a recess (22) through which the wire (14) proceeds, wherein the recess (22) is configured in a way that a relative movement of the wire (14) is enabled within the recess (22).

8. Camera device (10) according to one of the preceding claims,
**characterized in that**
the housing (20) is at least configured from two parts, wherein particularly a frontal housing part (21) and a rear housing part (30) configure the housing (20), wherein the frontal housing part (21) is facing the deployed position (2) and the rear housing part (30) is facing the additional position (3).

9. Camera device (10) according to one of the preceding claims,
**characterized in that**
the housing (20) comprises an acceptance (25) in which at least one gear means is moveably accepted.

10. Camera device (10) according to one of the preceding claims,
**characterized in that**
an actuator (40) is in operative connection with the drive (50) as a gear means, wherein the actuator (40) is connected to the carriage (11), particularly with the second carriage part (11.2).

11. Camera device (10) according to one of the preceding claims,
**characterized in that**
the drive (50) comprises a drive element (51) which acts on the actuator (40), wherein particularly the drive element (51) is pivotably mounted about an axis (52) and engages a guide rail (44) of the actuator (40) or the drive element (51) comprises a cam (53) which moves during a movement of the camera (4) between the retracted position (1) and the deployed position (2) within the guide rail (44).

12. Camera device (10) according to one of the preceding claims,
**characterized in that**
the actuator (40) is pivotably mounted about an axis (41), wherein particularly the actuator (40) is in the acceptance (25) of the housing (20).

13. Camera device (10) according to one of the preceding claims,
**characterized in that**
the guide rail (44) comprises a first area (45) within which the moving drive element (51) moves between the retracted position (1) and the deployed position (2) during the movement of the camera (4) and comprises a second area (46), within which the stationary drive element (51) moves between the retracted position (1) and the additional position (3) during the movement of the camera (4).

14. Camera device (10) according to one of the preceding claims,
**characterized in that**
a spring element (6) acts at the carriage (11) which spring force is oriented oppositely to the movement in the direction of the additional position (3), wherein in particular the spring element (6) is assembled within a chamber (32) of the housing (20), wherein particularly the carriage (11) comprises a protrusion (11.8) which contacts the spring element (6).

15. Camera device (10) according to one of the preceding claims,
**characterized in that**
the chamber (32) comprises an opening (33) through which the protrusion (11.8) extends during a movement of the camera (4) in the direction of the additional position (3).

16. Camera device (10) according to one of the preceding claims,
**characterized in that**
the actuator (40) is connected with the carriage (11) via a fastening element (42), wherein particularly the fastening element (42) is moveable within the equalizing contour (43) of the actuator (40).

17. Camera device (10) according to one of the preceding claims,
**characterized in that**
a switch (16) is assembled at the housing (20) which at least partially extends in the travel on the carriage (11), wherein the carriage (11) comprises a releasing element (11.6), which triggers the switch (16) during the movement of the camera (4) in the direction of the additional position (3), or that the housing (20), within which the carriage (11) is moveable, is stationary.

18. Camera device (10) according to one of the preceding claims,
**characterized in that**
a moveable lid (12) covers the camera (4) in the retracted position (1) and in the deployed position (2) the lid (12) is in an open position (18) by which the camera (4) comprises a free sight towards the outside (5), in particularly that the lid (12) comprises at least one pressure element (19) at the inside which acts on the camera (4) during a manual actuation from the outside (5), particularly on the carriage (11).

19. Camera device (10) according to one of the preceding claims,
**characterized in that**
a crash lock (84) is intended which acts on the carriage (11) during a possible accident, whereby it is prevented that the carriage (11) moves from the retracted position (1) into the additional position (3).

## Revendications

1. Dispositif de caméra (10), utilisé en particulier comme aide au stationnement pour un véhicule automobile, comprenant
une unité d'entraînement (50) qui est en liaison fonctionnelle par l'intermédiaire de moyens de transmission avec une caméra (4) qui est mobile entre une position rentrée (1) et une position sortie (2),
un chariot (11) qui comprend la caméra (4) et est mobile en commun avec la caméra (4),
**caractérisé en ce**
**que** les moyens de transmission sont réalisés de telle sorte qu'un actionnement manuel depuis l'extérieur (5) permet de déplacer la caméra (4), à l'intérieur, dans une position supplémentaire (3), allant au-delà de la position rentrée (L).

2. Dispositif de caméra (10) selon la revendication 1,
**caractérisé en ce**
**que** la distance de la caméra (4) entre la position supplémentaire (3) et la position sortie (2) est plus grande que la distance de la caméra (4) entre la position rentrée (1) et la position sortie (2).

3. Dispositif de caméra (10) selon la revendication 1 ou 2,
**caractérisé en ce**
**que** le chariot (11) est réalisé au moins en deux parties, en particulier que le chariot (11) est formé par une première (11.1) et une deuxième partie de chariot (11.2).

4. Dispositif de caméra (10) selon l'une des revendications précédentes,
**caractérisé en ce**
**qu'**un déplacement de la caméra (4) de la position rentrée (1) en direction de la position supplémentaire (3) permet de déclencher un signal, en particulier de déclencher une fonction spécifique au véhicule ou d'utiliser la caméra comme commutateur.

5. Dispositif de caméra (10) selon l'une des revendications précédentes,
**caractérisé en ce**
**que** le chariot (11) présente une ouverture (11.7) à travers laquelle un câble électrique (14) s'étend jusqu'à la caméra (4), en particulier que l'extension du câble (14) à l'intérieur de l'ouverture (11.7) est orientée sensiblement perpendiculairement à la direction de déplacement du chariot (11).

6. Dispositif de caméra (10) selon l'une des revendications précédentes,
**caractérisé en ce**
**qu'**un boîtier (20) est prévu, à l'intérieur duquel le chariot (11) est monté mobile, en particulier que le boîtier (20) présente au moins un élément de guidage (34) sur lequel le chariot (11) est guidé pendant le déplacement entre les positions (1, 2, 3).

7. Dispositif de caméra (10) selon l'une des revendications précédentes,
**caractérisé en ce**
**que** le boîtier (20) présente un évidement (22) à travers lequel passe le câble (14), l'évidement (22) étant conçu de telle sorte qu'un mouvement relatif du câble (14) à l'intérieur de l'évidement (22) soit possible.

8. Dispositif de caméra (10) selon l'une des revendications précédentes,
**caractérisé en ce**
**que** le boîtier (20) est réalisé au moins en deux parties, en particulier une partie de boîtier avant (21) et une partie de boîtier arrière (30) formant le boîtier (20), la partie de boîtier avant (21) étant tournée vers la position sortie (2) et la partie de boîtier arrière (30) tournée vers la position supplémentaire (3).

9. Dispositif de caméra (10) selon l'une des revendications précédentes,
**caractérisé en ce**
**que** le boîtier (20) présente un logement (25) dans lequel au moins un moyen de transmission est reçu de manière mobile.

10. Dispositif de caméra (10) selon l'une des revendications précédentes,
**caractérisé en ce**
**qu'**un entraîneur (40) servant de moyen de transmission est en liaison fonctionnelle avec l'unité d'entraînement (50), l'entraîneur (40) étant relié au chariot (11), en particulier à la deuxième partie de chariot (11.2).

11. Dispositif de caméra (10) selon l'une des revendications précédentes, **caractérisé en ce**
**que** l'unité d'entraînement (50) présente un élément d'entraînement (51) qui agit sur l'entraîneur (40), l'élément d'entraînement (51) étant en particulier monté tournant autour d'un axe (52) et s'engageant dans un guide de coulisse (44) de l'entraîneur (40) ou l'élément d'entraînement (51) présentant une came (53) qui, lors d'un déplacement de la caméra (4) entre la position rentrée (1) et la position sortie (2), se déplace à l'intérieur du guide de coulisse (44).

12. Dispositif de caméra (10) selon l'une des revendications précédentes,
**caractérisé en ce**
**que** l'entraîneur (40) est monté tournant autour d'un axe (41), l'entraîneur (40) se trouvant en particulier dans le logement (25) du boîtier (20).

13. Dispositif de caméra (10) selon l'une des revendications précédentes,
**caractérisé en ce**
**que** le guide de coulisse (44) présente une première zone (45) à l'intérieur de laquelle l'élément d'entraînement (51) en mouvement se déplace lors du déplacement de la caméra (4) entre la position rentrée (1) et la position sortie (2) et une deuxième zone (46) à l'intérieur de laquelle l'élément d'entraînement (51) stationnaire se déplace lors du déplacement de la caméra (4) entre la position rentrée (1) et la position supplémentaire (3).

14. Dispositif de caméra (10) selon l'une des revendications précédentes,
**caractérisé en ce**
**que** sur le chariot (11) agit un élément ressort (6) dont la force de ressort est orientée à l'opposé du déplacement en direction de la position supplémentaire (3), en particulier l'élément ressort (6) étant disposé à l'intérieur d'une chambre (32) du boîtier (20), en particulier le chariot (11) présentant une saillie (11.8) qui vient en contact avec l'élément ressort (6).

15. Dispositif de caméra (10) selon l'une des revendications précédentes,
**caractérisé en ce**
**que** la chambre (32) présente une ouverture (33) à travers laquelle la saillie (1 1.8) s'étend lors du déplacement de la caméra (4) en direction de la position supplémentaire (3).

16. Dispositif de caméra (10) selon l'une des revendications précédentes,
**caractérisé en ce**
**que** l'entraîneur (40) est relié au chariot (11) au moyen d'un élément de fixation (42), en particulier l'élément de fixation (42) étant mobile à l'intérieur d'un contour de compensation (43) de l'entraîneur (40).

17. Dispositif de caméra (10) selon l'une des revendications précédentes,
**caractérisé en ce**
**qu'**un commutateur (16) est disposé sur le boîtier (20), lequel pénètre au moins partiellement dans le chemin de déplacement du chariot (11), le chariot (11) présentant un élément de déclenchement (11.6) qui déclenche le commutateur (16) lors du déplacement de la caméra (4) en direction de la position supplémentaire (3) ou le boîtier (20), à l'intérieur duquel le chariot (11) est mobile, étant fixe.

18. Dispositif de caméra (10) selon l'une des revendications précédentes,
**caractérisé en ce**
**qu'**un couvercle mobile (12) couvre la caméra (4) dans la position rentrée (1) et que, dans la position sortie (2), le couvercle (12) se trouve dans une position ouverte (18) dans laquelle la caméra (4) a une vue dégagée vers l'extérieur (5), en particulier que le couvercle (12) présente du côté intérieur au moins un élément de pression (19) qui agit sur la caméra (4) lors d'un actionnement manuel depuis l'extérieur (5).

19. Dispositif de caméra (10) selon l'une des revendications précédentes,
**caractérisé en ce**
**qu'**un verrou de collision (84) est prévu, qui agit sur le chariot (11) lors d'un éventuel accident, empêchant ainsi le chariot (11) de se déplacer de la position rentrée (1) dans la position supplémentaire (3).
